Europäisches Patentamt

European Patent Office

Office européen des brevets

(19)

(11) Veröffentlichungsnummer: **0 276 691 B1**

(12) **EUROPÄISCHE PATENTSCHRIFT**

(45) Veröffentlichungstag der Patentschrift: 17.07.91

(51) Int. Cl.⁵: **C09J 133/08**, C08L 33/08, C08K 3/04, H01B 1/24

(21) Anmeldenummer: 88100443.6

(22) Anmeldetag: 14.01.88

(54) Haftkleber.

(30) Priorität: 22.01.87 DE 3701757

(43) Veröffentlichungstag der Anmeldung:
03.08.88 Patentblatt 88/31

(45) Bekanntmachung des Hinweises auf die
Patenterteilung:
17.07.91 Patentblatt 91/29

(84) Benannte Vertragsstaaten:
**AT BE DE FR GB NL**

(56) Entgegenhaltungen:
CH-A- 623 068
GB-A- 1 103 698
US-A- 3 547 852
US-A- 4 414 142

I. SKEIST: "Handbook of adhesives", 2. Auflage, 1982, Seiten 776-777, Van Nostrand Reinhold Co., New York, US; L.S. BUCHOFF:
"Adhesives in the electrical industry"

(73) Patentinhaber: Henkel Kommanditgesellschaft
auf Aktien
Postfach 1100 Henkelstrasse 67
W-4000 Düsseldorf-Holthausen(DE)

(72) Erfinder: Tamm, Horst
Ernst-Reuter-Weg 5
W-5657 Haan(DE)
Erfinder: Knop, Franz-Bernhard, Dr.
Robert-Koch-Strasse 10
W-4019 Monheim-Blee(DE)
Erfinder: Kirchner, Claus
Zum Hexenknotten 4
W-4000 Düsseldorf(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Haftkleber, die sich durch gute Dauerhaftklebrigkeit auszeichnen, hohe Schälfestigkeiten ergeben, weitgehend resistent gegen Weichmacherwanderung sind, elektrische Leitfähigkeit aufweisen und deren Leitfähigkeit entsprechend den verschiedenen Anforderungen unterschiedlich eingestellt werden kann.

Es ist bekannt, Klebstoffe dadurch elektrisch leitfähig zu machen, indem man elektrisch leitfähige Substanzen wie Ruß oder Metallpulver einarbeitet. Jedoch führt dies nicht in allen Fällen zum gewünschten Erfolg oder kann Nachteile, wie den Verlust an Klebekraft, mit sich bringen, insbesondere den Verlust von Anfangsklebkraft (Tack) und Haftklebekraft. Bei Ruß beobachtet man zudem häufig eine zeitabhängige Abnahme der elektrischen Leitfähigkeit, so daß einige Monate alte Klebstoffe nicht mehr die voll erforderliche Fähigkeit zum Ableiten elektrischer Ladungen besitzen.

Aufgabe der vorliegenden Erfindung war es, solche Klebstoffe zu entwickeln, die neben einer dauerhaften Haftklebrigkeit eine solche eletrische Leitfähigkeit aufweisen, daß sich bildende elektrostatischen Aufladungen von den verklebten Werkstoffen abgeleitet werden können. Darüber hinaus sollten Varianten dieses Klebstoffes nicht nur die Abführung elektrostatischer Ladung ermöglichen, sondern sogar in Verbindung mit geeigneten, zu klebenden Werkstoffen deren Isolatorwirkung erhalten. Das heißt, daß eine an offenen, spannungsführenden Geräten arbeitende Person bei versehentlicher Berührung spannungsführender Teile nicht geschädigt wird. Dies bedeutet, daß bei Verwendung eines solchen Klebstoffes in Verbindung mit geeigneten, damit zu klebenden Materialien, z.B. entsprechend leitfähigen Bodenbelägen, eine Ladungsabführung in Analogie zu DIN 51 953 und DIN 16 860 und zugleich die Isolatorforderung der VDE 0 100-Vorschrift erfüllt wird.

Eine weitere Aufgabe der Erfindung bestand darin, solche Haftklebstoffe zu finden, die sich als wässrige Dispersionen verarbeiten lassen, die gewünschten elektrischen Eigenschaften nach ihrem Auftrag aufweisen und zumindest für eine Übergangszeit einen besonders hohen Tack aufweisen, der es erlaubt auch unter innerer Spannung stehende, flächige Belagsstoffe vollflächig fest mit dem Untergrund zu verbinden.

Diese Aufgabe konnte gelöst werden durch Haftkleber auf Basis dauerhaftklebriger, filmbildender Zusammensetzungen, welche dadurch gekennzeichnet sind, daß sie in einer solchen Menge feinverteilten Graphit enthalten, daß dem Klebefilm eine Leitfähigkeit, gemessen als Widerstand nach DIN 53 276 von $10^4$ bis $10^7$ Ohm besitzt. Diese Bedingungen werden erfüllt durch Haftkleber, die den feinverteilten Graphit in einer Menge von 5 bis 20, insbesondere 8 bis 15 Gew.-% bezogen auf die haftklebrige Zusammensetzung enthalten.

Die Basis für die dauerhaftklebrigen, filmbildenden Polymeren können Copolymerisate sein von Alkylacrylaten, insbesondere Ethyl-, Butyl- und Ethylhexylacrylat mit Vinylacetat und gegebenenfalls Ethylen, wobei gegebenenfalls auch Copolymerisate des Vinylacetats mit Ethylen mitverwendet werden können. Derartige Copolymerisate für sich allein ergeben noch keinen Klebstoff mit kräftigem Tack, sondern es müssen noch weitere klebrig machende Harze eines Erweichungsbereiches zwischen 65 bis 120 °C, insbesondere 75 bis 105 °C, vorhanden sein. Weiter sollten Weichharze, Weichmacher und/oder physiologisch unbedenkliche hochsiedende Lösungsmittel vorhanden sein.

Im Gegensatz zu den meisten haftklebrigen Zubereitungen werden die für die Erfindung verwendeten Haftkleber in Form von wässrigen Dispersionen eingesetzt. Diese sollen einen hohen Feststoffgehalt aufweisen, der bei mindestens 45 Gew.-%, meist aber bei 60 Gew.-% und sogar darüber liegt. Unter den geeigneten Copolymerisaten sind solche von besonderem Interesse, die beispielsweise bestehen aus 25 bis 35 Gew.-% Ethylacrylat, 25 bis 35 Gew.-% Vinylacetat und 35 bis 45 Gew.-% Ethylen. Weiterhin können fakultativ etwa 5 bis 20 Gew.-% zusätzlich solche Polymerisatdispersionen verwendet werden, die aus 70 bis 80 Gew.-% Vinylacetat mit 30 bis 20 Gew.-% Ethylen bestehen. Selbstverständlich werden auch diese in Form der wässrigen Dispersionen mit einem Feststoffgehalt zwischen 45 und 65 Gew.-% verwendet. Es hat sich als zweckmäßig erwiesen, diese Dispersionen unter Verwendung von Hydrokolloiden herzustellen, die einen Flockungspunkt oberhalb von 80 °C aufweisen. In der Technik wird als Schutzkolloid für diesen Zweck häufig Polyvinylalkohol oder Hydroxyethylcellulose verwendet.

Die für die Haftkleber einzusetzenden Klebharze sollen einen Erweichungsbereich zwischen etwa 65 und 120 °C aufweisen. Sie können natürlichen Ursprungs sein, wie etwa Balsamharz, und können in an sich bekannter Weise modifiziert sein. Als Modifikationen kommen Disproportionierungen, Di- und Polymerisierungen, Hydrierungen, Dienadditionen mit Dienophilen, z.B. Maleinsäureanhydrid und Veresterungen mit Glykol, Polyethylenglykolen, Glycerin, Pentaerythrit und ähnlichen Alkoholen in Frage. Weiterhin ist es möglich, Kohlenwasserstoffharze zu verwenden bzw. mitzuverwenden, die einen Erweichungspunkt im vorgenannten Bereich aufweisen.

Ein weiterer wesentlicher Aspekt der vorliegenden Erfindung ist es, beim Einarbeiten der vorgenannten Hilfsstoffe auf die Mitverwendung von leicht brennbaren und physiologisch bedenklichen Lösungsmittel verzichten zu können. Derartige harzartige Hilfsstoffe werden üblicherweise in relativ niedrig siedenden Lösungsmitteln wie Toluol und Xylol aufgelöst und als solche Harzlösungen den Dispersionen zugegeben. Nach einer günstigen Ausführungsform werden die Harze selbst aufgeschmolzen und in dieser Form unter Verwendung von 3 bis 10 Gew.-%, bezogen auf die Harzschmelze, an nichtionogenen Netzmitteln in die Dispersion eingearbeitet. Als Netzmitteln eignen sich unter anderem Ethylenoxydaddukte an Akylphenol (z.B. Nonylphenol), Fettalkohole oder Blockcopolymerisate von Ethylenoxid an Propylenoxid.

In der Praxis haben sich Additionsprodukte von 4 bis 30 Mol Ethylenoxyd/Nonylphenol, insbesondere 6 bis 10 Mol Ethylenoxyd/Nonylphenol und 2 bis 6 Mol Ethylenoxid/Fettalkohol bewährt. Gegebenenfalls kann es auch günstig sein, zusätzlich zu den nichtionischen Netzmitteln anionenaktive Netzmittel mitzuverwenden. Hierbei handelt es sich beispielsweise um Sulfonierungsprodukte von Alkylbenzol oder um Schwefelsäure- oder Phosphorsäureester von Fettalkoholen oder von Fettalkoholethylenoxyddadukten. Als Beispiel sei hier ein Veresterungsprodukte von 1 Mol Phosphorsäure mit 1 Mol Ethylenoxyaddukt an Fettalkohol (Molverhältnis 6 : 1) erwähnt.

In der vorliegenden Erfindung wird der Graphit in der üblichen handelsüblichen Form eingesetzt, und zwecks Einarbeitung in wässriger Suspension mit den vorgenannten Netzmitteln verarbeitet. Insbesondere für den Graphit hat sich die Mitverwendung der obengenannten Phosphorsäureester bewährt. Auf diese Art werden besonders stabile und mit den erwähnten übrigen Bestandteilen wie Copolymerisatdispersionen, Harzen und Weichmachungsmitteln besonders gut verträgliche Suspensionen von Graphit gewonnen.

Die erfindungsgemäßen Klebstoffe werden zweckmäßig unter Verwendung von hochsiedenden, physiologisch nicht bedenklichen und nicht kennzeichnungspflichtigen Lösungsmitteln (Verordnung über Gefahrstoffe vom 01.10.1986) vom Typ der Alkylether des Di-, Tri-, Tetraethylenglykols und gegebenenfalls auch den Estern niedriger Carbonsäuren dieser Ether hergestellt. Derartige Lösungsmittel zeigen eine gewisse Hydrophilie und wirken sich besonders bei der Einarbeitung der Harze durch Viskositätssenkung der Harzschmelze günstig aus. Sie verleihen außerdem dem Haftklebstoff eine lang anhaltende konstante Klebrigkeit. Bei den Alkylresten vorerwähnter Esther der Oligoethylenglykole kann es sich um solche mit 1 und 6 C-Atomen, insbesondere aber mit 2 und 4 C-Atomen - also um die Monoethyl- und Monobutylether handeln, wobei insbesondere auf die physiologische Unbedenklichkeit der Oligoethylenglykolderivate bedeutsam ist. Auch andere hydrophile, physiologisch unbedenkliche hochsiedende Lösungsmittel wie Diacetin und 1,4-Butandiol können Verwendung finden. Es können durch Variation sowohl der Menge wie der Natur der hochsiedenden Lösungsmittel besonders gewünschte Eigenschaften herausgearbeitet werden.

Weiterhin ist es in vielen Fällen zweckdienlich, übliche Hilfsstoffe für Dispersionsklebstoffe mitzuverwenden. Es handelt sich hierbei um viskositätsbeeinflussende Zusätze wie beispielsweise anorganische Salze (z.B. Natriumhexametaphosphat) oder um Alkali- oder Ammoniumsalze niedrigmolekularer Polyacrylsäure. Weiterhin können Dispergierhilfsmittel, Hydrokolloide oder auch Weichmacher (Dibutylphtalat, Dioctylphthalat, Alkylsulfonsäureester von Phenolen) eingesetzt werden. Selbstverständlich können auch niedrigsiedende Lösungsmittel (wie Ethanol, Isopropanol) in geringen Mengen zur Beeinflussung verschiedener anwendungstechnischer Eigenschaften eingesetzt werden.

Bei der Konfektionierung der Klebstffe wird man wie in den meisten Fällen üblich, Konservierungsmittel z.B. phenolische Verbindungen (o-Phenylphenol oder dessen Natriumsalz, p-Hydroxybenzoesäurealkylester usw.),Hexahydrotriazinderivate, Benzisothioazolin oder Dithiocarbamate einzusetzen.

Sollen die Klebstoffe durch einen Sprühauftrag appliziert werden, kann es sinnvoll sein, zusätzlich Antischaummittel zu verwenden. Derartige Antischaummittel sind bekannt und werden handelsüblich auf Silikonbasis, Mineralölbasis, Fettalkoholbasis oder auf Basis von Polyalkylenglykolen oder Phosphorsäureestern im Handel angeboten. Um eine optimale Verträglichkeit des Klebstoffes und seiner Bestandteile sicherzustellen, sol der pH-Wert mit Ammoniak oder einem anderen Regulans zwischen etwa 5 und 7 eingestellt werden.

Nach erfindungsgemäßem Verfahren hergestellte Haftklebstoffe eignen sich zur Klebung der verschiedensten Werkstoffe. Insbesondere sind sie zur Klebung von leitfähigen PVC- und Kautschukbelägen auf saugfähigen (z.B. Zementestrich, Beton, Holz, Holzwerkstoffe) und nicht saugfähigen (z.B. PVC-Nutzböden, Kunststoffestrichen, Polyurethanbeschichtungen) Untergründen geeignet. Bei der Klebung von dichten Materialien auf saugfähigen Untergründen kann man die Phase hohen Tacks ausnutzen, um Materialien mit hohen inneren Spannungen bzw. hohen Rückstellkräften vollflächig auf den Untergrund zu verankern. Sie tritt nach einer Ablüftezeit von ca. 20 Minuten ein und hält mindestens 60 Minuten an.

Ganz besonders eignen sich die nach dem erfindungsgemäßen Verfahren hergestellten Haftklebstoffe zur Klebung dichter Materialien auf dichten Untergründen, wie PVC- oder Linoleumböden, Steinfliesen, Terrazzo sowie mit duroplastischen Kunststoff beschichteten Böden. Während zur leitfähigen Klebung dichter Materialien auf dichten Untergründen bisher nur entweder feuergefährliche, zweiseitig aufzutragende leitfähige Chloroprenekontaktklebstoffe oder kostenaufwendige und schwierig zu handhabende, zweikomponentige, leitfähige Reaktionsklebstoffe ohne Tack zur Verfügung standen, treten derartige Nachteile mit den einkomponentigen erfindungsgemäßen Klebstoffen bei einseitigem Klebstoffauftrag nicht auf.

Von besonderem Vorteil ist es, daß die Leitfähigkeit der Haftklebeschichtung nach Trocknung des Klebstoffilmes praktisch unverändert bleibt.

## Beispiele

### Beispiel 1

Unter stätigem Rühren wurden zu 41,1 Gewichts-teilen (=GT) einer auf ca. 80 °C erwärmten 60%igen Dispersion eines Copolymerisates aus 29 GT Vinylacetat, 30 GT Ethylacrylat und 41 GT Ethylen, die als Schutzkolloid 2 % Polyvinylalkohol und nichtionogene und anionische Emulgatoren enthielt, eine ebenfalls auf ca. 80 °C erwärmte Schemelze, die zu 65 GT aus natürlichem, hellem Balsamharz, 23 GT eines bei Raumtemperatur viskos flüssigen Balsamharzesters (Weichharz), 4 GT eines mit 6 Mol Ethylenoxid umgesetztes Nonylphenols und 8 GT eines Triethylenglykolbutylethers bestand, hinzugefügt, bis eine homogene Mischung aus Dispersion und Harzschmelze entstand. Unter weiterem Rühren wurden ca. 3 Gew.-teile Wasser und 10,8 Gew.-teile einer 60 %igen Dispersion eines Copolymersates aus ca. 75 Gew.-% Vinylacetat und ca. 25 Gew.-% Ethylen hinzugefügt. Nach Zugabe von 0,3 GT Natriumhexametaphosphats wurde mit Ammoniak der pH-Wert auf ca. 6,4 eingestellt. Unter fortgesetztem Rühren wurde von 1,8 Gew.-teile Butyldiglykolacetat und danach eine Graphitsuspension hinzugesetzt. Diese bestand aus 15 GT eines handelsüblichen Graphits (Lonza KS 15), 0,5 GT des Adduktes von 6 Mol Ethylenoxid an 1 Mol Nonylphenol und 0,5 GT des Phosphorsäureesters des Adduktes von 6 Mol Ethylenoxid an 1 Mol Nonylphenol. Es wird mit Wasser auf 100 Gew.-teile ergänzt und dabei eine Viskosität von ca. 10 000 mPa·s (Haake Viskotester VT 181, Meßkörper 100, Meßstufe 4, 23 °C) eingestellt.

Der nach DIN 53 276 gemessene Klebstoffilm besitzt einen Ableitwiderstand von $5 \cdot 10^6$ Ohm; bei der Klebung eines leitfähigen PVC-Materials mit den Daten $10^7$ Ohm (nach DIN 53 276) wurde ein Standortübergangswiderstand, gemessen nach VDE 0 100 von größer 50 000 Ohm gemessen.

Nach DIN 16 860 durchgeführte PVC-Klebungen ergaben folgende Schälwerte:

| | |
|---|---|
| Lagerung bei Raumtemperatur | 21 N/cm |
| Lagerung bei 70 °C | 19 N/cm |

Da die Anforderung der DIN 16 860 bei 10 N/cm liegt, übertrifft der Klebstoff die Normforderung. Er erweist sich als weichmacherbeständig.

### Beispiel 2

Anlog wie im Beispiel 1 beschrieben, wurde ein Klebstoff erzeugt, der 17,4 GT Graphit enthielt. Es wurden folgende Daten gemessen (Meßmethodik wie Beispiel 1):

| | |
|---|---|
| Viskosität 10 000 mPa·s | |
| Leitfähigkeit | $1 \cdot 10^5$ Ohm |
| Schälwerte (Raumtemperatur) | 19 N/cm |
| Schälwerte, 70 °C | 21 N/cm |

Das heißt, daß der Klebstoff die Anforderungen der Normen DIN 51 953 (Leitfähigkeit) und DIN 16 860 (Schälwiderstände) erfüllt und als weichmacherbeständig anzusehen ist.

## Patentansprüche

1. Haftkleber auf Basis dauerhaftklebriger filmbildender Zusammensetzungen, gekennzeichnet durch einen Gehalt an feinverteiltem Graphit in einer solchen Menge, daß der Klebstofffilm, gemessen nach DIN 53 276 einen Ableitwiderstand von $10^4$ bis $10^7$ Ohm besitzt.

2. Haftkleber nach Anspruch 1, dadurch gekennzeichnet, daß er feinverteilten Graphit in einer Menge von 5 bis 20, vorzugsweise 10 bis 18 Gew.-%, bezogen auf die haftklebrige Zusammensetzung, enthält.

3. Haftkleber nach Ansprüchen 1 und 2, dadurch gekennzeichnet, daß er als haftklebrige filmbildende Polymere Copolymerisate von Alkylacrylat, Vinylacetat und gegebenenfalls Ethylen, enthält.

4. Haftkleber nach Ansprüchen 1 bis 3, dadurch gekennzeichnet, daß er zur Verbesserung der filmbildenden und klebetechnischen Eigenschaften Copolymerisate aus Vinylacetat und Ethylen und klebrig machende Harze eines Erweichungsbereiches zwischen 65 und 120 °C, insbesondere 75 bis 105 °C, enthält.

5. Haftkleber nach Ansprüchen 1 bis 4, dadurch gekennzeichnet, daß man zu seiner Herstellung Weichharze, Weichmacher und hochsiedende Lösungsmittel wie z.B. Alkylether des Dri-, Tri- und Tetraethylenglykols und deren Ester niedriger Carbonsäure mitverwendet.

6. Verfahren zur Herstellung eines Haftklebers nach Ansprüchen 1 bis 5, dadurch gekennzeichnet, daß die klebrig machenden Harze nach Anspruch 4 in die Copolymerisatdispersionen nach Ansprüchen 3 und gegebenenfalls 4 in Form von Schmelzen, gegebenenfalls unter Zusatz von nichtionischen und anionischen Netzmitteln, von Weichharzen, Weichmachern bzw. hochsiedenden Lösungsmitteln entsprechend Anspruch 5, eingearbeitet werden.

7. Verfahren zur Herstellung eines Haftklebers nach Ansprüchen 1 bis 6, dadurch gekennzeichnet, daß der Graphit unter Zuhilfenahme von 5 bis 10 Gew.-%, bezogen auf Graphit, an nichtionischen und anionischen Netzmitteln insbesondere des Typs von Ethylenoxidaddukten an Alkylphenole und/oder deren Phosphaten und Ethylenoxidaddukten an Fettalkoholen und deren Phosphaten eingearbeitet wird.

8. Verwendung eines Haftklebers nach Ansprüchen 1 bis 7 zur Klebung von PVC und kautschukartigen Werkstoffen, insbesondere solcher mit leitfähiger Einstellung, auf saugende Untergründe wie Zementestrich, Kalk- und Gipsputz, Beton, Holz und Holzwerkstoffen.

9. Verwendung eines Haftklebers nach Ansprüchen 1 bis 8 zur Klebung von Materialien nach Anspruch 8 auf dichte Untergründe wie PVC- und Linoleumböden, Steinfliesen, Terrazzo sowie mit duroplastischem Kunststoff beschichteten Böden.

## Claims

1. A contact adhesive based on permanently tacky film-forming compositions, characterized by a content of fine-particle graphite in such a quantity that the adhesive film has a leakage resistance of $10^4$ to $10^7$ ohm.

2. A contact adhesive as claimed in claim 1, characterized in that it contains fine-particle graphite in a quantity of 5 to 20% by weight and preferably 10 to 18% by weight, based on the permanently tacky composition.

3. A contact adhesive as claimed in claims 1 and 2, characterized in that it contains copolymers of alkyl acrylate, vinyl acetate and, optionally, ethylene as permanently tacky film-forming polymers.

4. A contact adhesive as claimed in claims 1 to 3, characterized in that, to improve its film-forming and adhesive properties, it contains copolymers of vinyl acetate and ethylene and tackifying resins having a softening range of 65 to 120 °C and, more particularly, 75 to 105 °C.

5. A contact adhesive as claimed in claims 1 to 4, characterized in that soft resins, plasticizers and high-boiling solvents, such as for example alkyl ethers of di-, tri- and tetraethylene glycol and lower carboxylic acid esters thereof, are used for its production.

5

6. A process for the production of the contact adhesive claimed in claims 1 to 5, characterized in that the tackifying resins according to claim 4 are incorporated in the copolymer dispersions according to claim 3 and, optionally, claim 4 in the form of melts, optionally with addition of nonionic and anionic wetting agents, soft resins, plasticizers and high-boiling solvents according to claim 5.

7. A process for the production of a contact adhesive according to claims 1 to 6, characterized in that the graphite is incorporated with the aid of 5 to 10% by weight, based on graphite, of nonionic and anionic wetting agents, more particularly selected from ethylene oxide adducts with alkyl phenols and/or phosphates thereof and ethylene oxide adducts with fatty alcohols and phosphates thereof.

8. The use of the contact adhesive claimed in claims 1 to 7 for bonding PVC and rubber-like materials, more particularly conductive types, to absorbent substrates, such as cement screed, lime and gypsum plaster, concrete, wood and wood materials.

9. The use of the contact adhesive according to claims 1 to 8 for bonding materials according to claim 8 to impervious substrates, such as PVC and linoleum flooring, stone tiles, terrazzo and floors coated with thermosets.

## Revendications

1. Adhésif sur la base de compositions adhésive de façon permanente, formant un film, caractérisé par une teneur en graphite finement réparti permettant au film de colle de posséder une résistance de fuite de $10^4$ à $10^7$ ohms, la mesure étant effectuée selon le document DIN n° 53 276.

2. Adhésif selon la revendication 1, caractérisé en ce qu'il contient du graphite finement réparti à hauteur de 5 à 20, de préférence 10 à 18 % en poids, mesuré par rapport à la composition adhésive.

3. Adhésif selon les revendications 1 et 2, caractérisé en ce qu'il contient comme polymères adhésifs, formant un film, des copolymérisats d'acrylate d'alkyle, d'acétate de vinyle et le cas échéant d'éthylène.

4. Adhésif selon l'une quelconque des revendications 1 à 3, caractérisé en ce qu'il contient pour améliorer les caractéristiques formant le film et de la technique du collage, des copolymérisats d'acétate de vinyl et d'éthylène ainsi que des résines passant à l'état adhésif dans une fourchette de température de ramollissement comprise entre 65 et 120° C, particulièrement entre 75 et 105° C.

5. Adhésif selon l'une quelconque des revendications 1 à 4, caractérisé en ce qu'on utilise conjointement par sa fabrication des résines molles, des émollients et des solvants à température d'ébullition élevée comme par exemple l'alkyléther du diéthylèneglycol, du triéthylèneglycol et du tétraéthylèneglycol ainsi que des esters qu'ils forment avec les acides carboxyliques à courte chaîne.

6. Procédé de fabrication d'un adhésif selon l'une quelconque des revendications 1 à 5, caractérisé en ce qu'on mélange les résines provoquant l'adhésivité selon la revendication 4 à l'intérieur de dispersions de copolymérisats, selon les revendications 3 et le cas échéant 4, sous forme de masses fondues, le cas échéant en ajoutant des agents mouillants non ioniques et anioniques, des résines molles, des émollients ou respectivement des solvants à température d'ébullition élevée correspondant à la revendication 5.

7. Procédé de fabrication d'un adhésif selon l'une quelconque des revendications 1 à 6, caractérisé en ce qu'on mélange le graphite à l'aide de 5 à 10 % en poids, mesuré par rapport au graphite, d'agents mouillants non ioniques et anioniques en particulier du type des composés d'addition de l'oxyéthylène avec les alkylphénols et/ou leurs phosphates, et du type des composés d'addition de l'oxyéthylène avec les alcools gras et leurs phosphates.

8. Utilisation d'un adhésif selon l'une quelconque des revendications 1 à 7 pour le collage de PVC et de matériaux caoutchouteux, et particulièrement un adhésif avec ajustement de conductivité sur des substrats absorbants comme une aire de ciment, un crépi à la chaux ou en plâtre, du béton, du bois et des matériaux dérivés du bois.

9. Utilisation d'un adhésif selon l'une quelconque des revendications 1 à 8 pour le collage de matériaux conformes à la revendication 8 sur des substrats compacrs comme des sols en PVC ou en linoléum, des carreaux de grès céramique, du terrazo ou granito ainsi que sur des sols recouverts de matière plastique thermo-durcissable.